# EUROPÄISCHE PATENTSCHRIFT

(11) **EP 1 825 179 B1**
(45) Veröffentlichungstag und Bekanntmachung des Hinweises auf die Patenterteilung: **03.11.2010**
(21) Anmeldenummer: 05850810.2
(22) Anmeldetag: 23.11.2005
(51) Int. Cl.: F16L 3/223

(54) **VORRICHTUNG ZUR ABSTÜTZUNG VON ROHREN**
DEVICE FOR SUPPORTING PIPES
DISPOSITIF DE SOUTIEN DE TUBES

(30) Priorität: 14.12.2004 DE 202004019291 U
(43) Veröffentlichungstag der Anmeldung: 29.08.2007
(73) Patentinhaber: Thread Guard Technology Ltd., Gibraltar (GI)
(72) Erfinder: KOVACS, George, A., Jr., D-29574 Ebstorf (DE)
(74) Vertreter: Bünemann, Egon
(86) Internationale Anmeldenummer: PCT/IB2005/004133
(87) Internationale Veröffentlichungsnummer: WO 2006/064380

(56) Entgegenhaltungen:
- EP-A- 0 196 446
- EP-A- 0 716 030
- EP-A- 0 859 181
- DE-A1- 4 031 378
- DE-A1- 19 837 171
- FR-A- 2 336 621
- US-A- 5 123 547
- US-A1- 2003 205 907

## Beschreibung

Die Erfindung betrifft eine Vorrichtung zur Abstützung von Rohren bei deren Lagerung und Transport in einer Ausbildung gemäß dem Oberbegriff des Anspruchs 1.

Eine solche Vorrichtung ist aus der US 5,123,547 bekannt, bei der Spannmittel nach Art einer Bolzen-Mutter-Kombination in Nuten an den Stirnenden der Rohrhaltekörper liegen und endseitig am obersten Rohrhaltekörper eine Durchgangsbohrung durchgreifen. Dies führt zu einer festen aber auch starren Abstützung der Rohre.

Ausgehend von der bekannten Vorrichtung befasst sich die Erfindung mit dem Problem, eine Vorrichtung zu schaffen, die eine sichere Abstützung der Rohre auch bei starken Temperaturwechseln oder -schwankungen gewährleistet Die Erfindung löst das Problem durch eine Vorrichtung mit den Merkmalen des Anspruchs 1.

Durch die Zwischenschaltung einer Spannfeder in die Verspannung der Rohrhaltekörper ist sichergestellt, daß auch bei temperaturbedingten Dehnungs- und Schrumpfungserscheinungen in den Vorrichtungsbestandteilen und den Rohren die Verspannung der Teile mit ausreichender Spannkraft erfolgt und Beschädigungen aus Spannungsspitzen, wie sie bei starken Dehnungserscheinungen auftreten können, vermieden sind.

Dadurch, dass der Spannbolzen im unteren Bereich ein Innengewinde aufweist, lässt sich die axiale Länge des gesamten Spannmittels verringern und trotz der zwischengeschalteten Spannfeder soweit in den Umriss der Abstützung hineinverlegen, dass keine störenden Vorsprünge bei Transport oder Lagerung auftreten.

Zwar ist aus der FR 2336621 eine Vorrichtung zur Abstützung von Rohren bei ortsfesten Wärmetauschersystemen bekannt, bei denen Rohrhaltekörper durch bolzenartige Spannmittel mit unterlegten Spannfedern zusammengehalten sind, um insbesondere Druckstöße und gefährliche Schwingungen abfangen zu können. Bei festen Installationen dieser Art ist allerdings der besondere Aufwand für Spannfedern nicht so erheblich wie bei Transportabstützungen und die Spannmittel mit den einenends mit Spannfedern unterlegter Spannmutter, die insgesamt von den Stirnenden der Rohrhaltekörper weg verlegt in Bohrungen durch die Rohrhaltekörper verlaufen, stehen auch unbedenklich nach außen vor.

Weitere Einzelheiten und Wirkungen ergeben sich aus der nachfolgenden Beschreibung und der Zeichnung, in der mehrere Ausführungsbeispiele des Gegenstands der Erfindung näher veranschaulicht sind. In der Zeichnung zeigen:
- Fig. 1: die Vorrichtung in einer ersten Ausführung nach der Erfindung in einem Schnitt nach der Linie I-I in Fig. 2,
- Fig. 2: eine Seitenansicht zu Fig. 1,
- Fig. 3: eine perspektivische Darstellung der Vorrichtung nach Fig. 1 und 2,
- Fig. 4: eine vergrößerte Darstellung der Einzelheit A in Fig. 3,
- Fig. 5: eine vergrößerte Darstellung der Einzelheit B in Fig. 3,
- Fig. 6: eine Seitenansicht eines einzelnen Rohrhaltekörpers,
- Fig. 7: eine Stirnansicht zu Fig. 6,
- Fig. 8: einen Schnitt nach Linie VIII-VIII in Fig. 6, und
- Fig. 9: eine abgebrochene Darstellung der Vorrichtung zur Veranschaulichung der Spannmittel im Schnitt in einer abgewandelten Ausführung.

Die in der Zeichnung veranschaulichte Abstützvorrichtung umfaßt in Betriebsstellung unter und über jeder Rohrlage angeordnete, vertikal untereinander fluchtende Rohrhaltekörper 1, von denen bei dem dargestellten Beispiel vier Rohrhaltekörper 1 vorgesehen sind, jedoch auch Vorrichtungseinheiten mit drei oder mehr als vier Rohrhaltekörpern 1 gebildet werden können. Die Rohrhaltekörper 1 haben ober- und unterseitig eine Anzahl von einander diametral gegenüberliegenden, untereinander beabstandeten Ausnehmungen 2 zur Aufnahme von Rohren, die sämtlich in der Zeichnung nur als Rohrstücke 15 veranschaulicht sind, in der Praxis jedoch entsprechende Längen aufweisen, wie sie beispielsweise zu Bohrzwecken oder zum Abteufen von Bohrungen benötigt werden. Je nach Länge der Rohre werden diese durch nahe der Rohrenden vorgesehene Vorrichtungseinheiten aus Rohrhaltekörpern 1 sowie gegebenenfalls durch Zwischeneinheiten unterstützt, so daß insgesamt die Abstützung der Rohre an zwei, drei oder mehr Stellen vorgenommen wird.

Bei dem dargestellten Beispiel weist jeder Rohrhaltekörper 1 ober- und unterseitig je vier Ausnehmungen 2 auf, so daß er zur Abstützung von vier Rohren innerhalb einer Rohrlage geeignet ist. Die Anzahl der Ausnehmungen 2 kann statt dessen aber auch weniger oder mehr als vier betragen.

Die Ausnehmungen 2 haben sämtlich eine trapezförmige Querschnittsform, wobei die jeweils nach außen hin divergierenden Seitenflächen 3 mit einer zwischen ihnen liegenden Basisfläche einen Winkel von 120° bis 150°, vorzugsweise 135°, einschließen. Die divergierenden Seitenflächen 3 gehen außenseitig in zu den Basisflächen 4 parallel ausgerichtete Außenflächen 5 der Rohrhaltekörper 1 über, die bei dem in einer Einheit obersten bzw. untersten Rohrhaltekörper 1 als Stand- bzw. Auflagefläche z.B. bei Stapelungen nutzbar sind.

Endseitig weisen die Rohrhaltekörper 1 ebene, in Betriebsstellung vertikale Stirnflächen 6 auf, welche die jeweils äußeren Endkanten 7,8 der benachbarten Außenflächen 5 verbinden. Dabei sind die Rohrhaltekörper 1 an ihren Stirnenden jeweils mit einer in Betriebsstellung vertikalen, von oben nach unten durchgehenden Nut 9 versehen, die zur Aufnahme bzw. Durchführung eines Spannmittels 10 dienen.

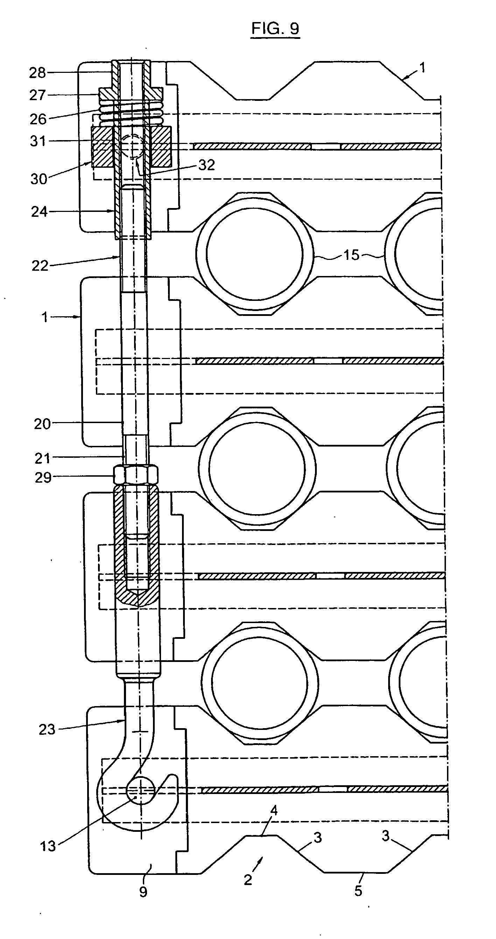

Sämtliche Rohrhaltekörper 1 können eine untereinander identische Ausführung aufweisen. Dies ist beispielsweise bei dem in Fig. 9 veranschaulichten Ausführungsbeispiel gegeben. Statt dessen kann für den in einer Vorrichtungseinheit jeweils obersten Rohrhaltekörper 1 eine Sonderform vorgesehen sein, auf die weiter unten noch eingegangen werden wird.

Sämtliche oder alle unterhalb eines obersten Rohrhaltekörpers 1 Anordnung findenden Rohrhaltekörper 1 sind an beiden Stirnenden mit einer in Höhe der horizontalen Mittelebene 12 der Rohrhaltekörper 1 verlaufenden, durchgehenden Querbohrung 11 versehen, die zur Aufnahme eines die stirnseitige Nut 9 frei durchquerenden Quersteckers 13 dient, wenn der Rohrhaltekörper 1 als unterstes Element in der Vorrichtungseinheit Anordnung findet. Findet ein Rohrhaltekörper 1 Anordnung als oberstes Element innerhalb einer Vorrichtungseinheit, dann können die beiden die Querbohrung 11 bildenden Bohrungsteile einen Schraubenbolzen aufnehmen, um ein Widerlager des Spannmittels 10 zu fixieren, wie das weiter unten noch erläutert werden wird.

Die Rohrhaltekörper 1 sind in ihrem zwischen den beidseitigen Ausnehmungen 2 gelegenen Mittelteil 16 mit einer Verstärkungseinlage 17 versehen, sofern sie, wie bevorzugt, aus einem polymeren Werkstoff wie PVC, PE, PU od.dgl. hergestellt sind. Die Verstärkungseinlage 17 besteht bevorzugt aus metallischem Werkstoff wie Stahl und ist in die Rohrhaltekörper 1 eingegossen.

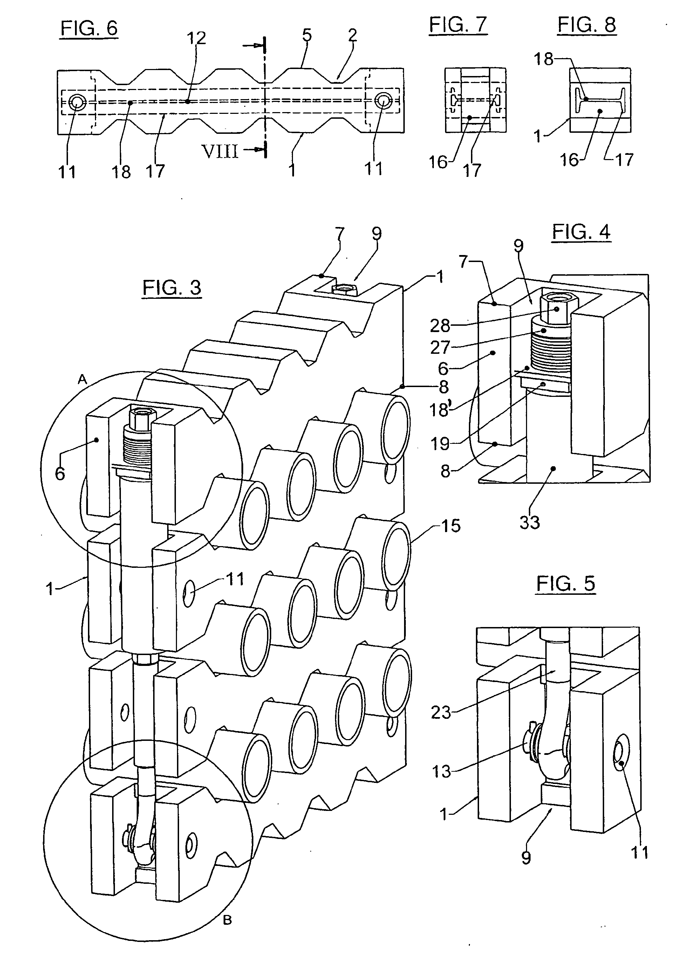

Die Verstärkungseinlage 17 besteht aus einem Doppel-T-Profilträger, dessen Mittelschenkel 18 parallel zu den Basisflächen 4 der Ausnehmungen 2 mittig zwischen diesen entlang der Mittelebene 12 angeordnet ist und Durchlaßöffnungen für den Materialdurchlaß beim Gießen aufweist. Die Verstärkungseinlage 17 erstreckt sich im wesentlichen über die gesamte Länge ihrer Rohrhaltekörper 1, ist jedoch auch stirnseitig durch Material der Rohrhaltekörper 1 abgedeckt. Sie nimmt einen überwiegenden Teil der Breite und Höhe des Mittelteils 16 der Rohrhaltekörper 1 ein, wie dies den Fig. 6 bis 8 zu entnehmen ist.

Der Mittelschenkel 18 der Verstärkungseinlage 17 ist bei sämtlichen oder allen für eine Anordnung unterhalb eines obersten Rohrhaltekörpers 1 vorgesehenen Rohrhaltekörpern 1 im Bereich der Nuten 9 und geringfügig darüber hinaus soweit ausgenommen, daß seine Stirnflächen noch vom Material der Rohrhaltekörper 1 im Bereich der Nuten 9 abgedeckt sind.

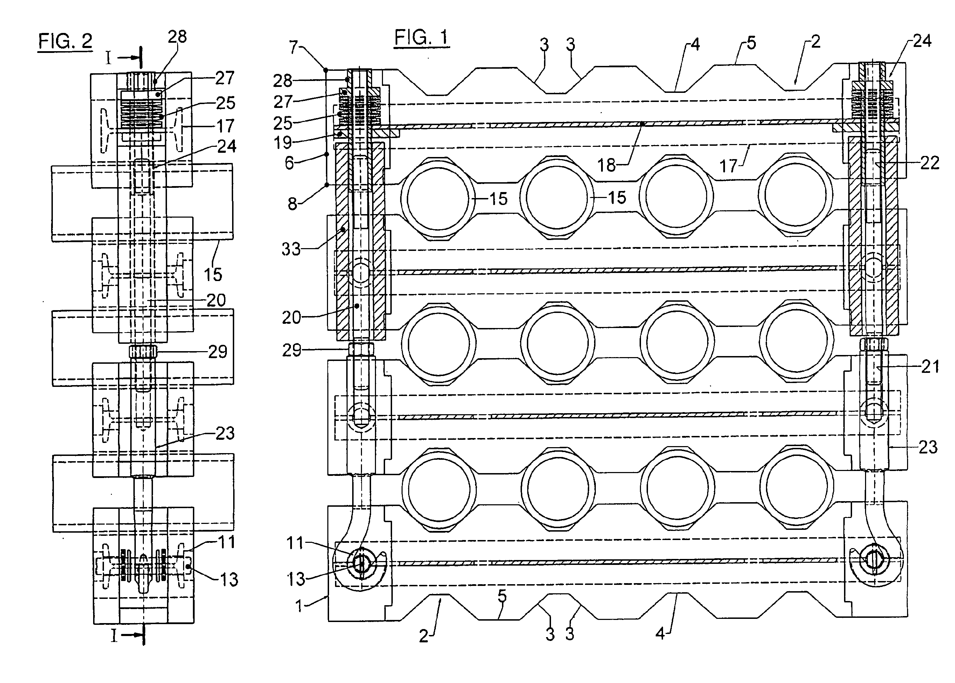

Bei der Ausführung der Rohrhaltekörper 1 gemäß Figuren 1 bis 8 erstreckt sich bei einer Ausführung, die für den Einsatz als oberster Rohrhaltekörper 1 innerhalb einer Vorrichtungseinheit bestimmt ist, der Mitteischenkel 18 der Verstärkungseinlage bis in die stirnseitigen Nuten 9 hinein und endet erst dicht vor den Stirnflächen 6 der Rohrhaltekörper 1, um auf diese Weise ein Widerlager zu bilden, an dem sich das Spannmittel 10 abstützen kann. Dieser in die Nuten 9 vorstehende Bereich 18' des Mittelschenkels 18 ist mit einer Durchgangsbohrung versehen und kann durch ein Plattenteil 19 verstärkt sein, das dem Mittelschenkelbereich 18' unterseitig zugeordnet und mit diesem verbunden, insbesondere verschweißt sein kann. Es kann dem Mittelschenkelbereich 18' auch oberseitig zugeordnet und dabei als Scheibe ausgebildet sein, die mit einer eigenen Durchgangsbohrung entsprechend der Durchgangsbohrung des Mittelschenkelbereiches 18' versehen ist, die mit dieser in Betriebsstellung fluchtet.

Als polymerer Werkstoff findet vorzugsweise ein solcher Anwendung, der eine gewisse Nachgiebigkeit darbietet, z.B. eine Shorehärte D von 43 bis 48 aufweist, so daß in den Ausnehmungen 2 aufgenommene Rohre 15 nach dem Verspannen der Rohrhaltekörper 1 innerhalb einer Vorrichtungseinheit nicht linienförmig, sondern in streifenförmigen Anlagebereichen in Eingriff mit den Flächen 3 bzw. 3 und 4 der Ausnehmungen 2 in Eingriff stehen.

In den Ausnehmungen 2 können Rohre 15 sicher aufgenommen und abgestützt werden, deren Durchmesser in einem erheblichen Bereich differieren kann. Es versteht sich dabei, daß in einer Rohrlage stets nur Rohre ein und desselben Durchmessers abgestützt werden können. Der jeweils bedienbare Durchmesserbereich richtet sich nach der Geometrie der trapezförmigen Ausnehmungen, d.h. nach der Neigung der Seitenflächen 3 und dem gegenseitigen Abstand der Seitenflächen 3 in Höhe der Basisflächen 4. Die Form der Ausnehmungen 2 stellt bei Rohren, die sich mit ihrem Durchmesser in dem vorgesehenen Durchmesserbereich bewegen, allenthalben sicher, daß die Rohre zumindest an den Seitenflächen 3 oder an den Seitenflächen 3 und der Basisfläche 4 einer jeder Ausnehmung 2 anliegen.

Als Spannmittel 10 kann grundsätzliches jedes geeignete Mittel Anwendung finden, das eine genügend hohe Spannkraft aufbringen kann, dauerhaft zuverlässig arbeitet und eine hohe Lebensdauer aufweist. Wesentlich ist, daß für alle Anwendungsfälle der Vorrichtung, bei denen die Vorrichtung starken Umgebungstemperatur-Differenzen ausgesetzt ist, die Spannkraft, die zwischen dem untersten und dem obersten Rohrhaltekörper 1 wirksam ist, über eine Spannfeder aufgebracht wird, so daß Schrumpf- und Dehnungserscheinungen der Vorrichtungsbestandteile und/oder der Rohre innerhalb des Federweges aufgefangen werden können, ohne daß eine vorgebbare Mindestspannung unterschritten oder eine vorgebbare Höchstspannung überschritten wird.

Bevorzugt weist das Spannmittel 10 eine mit gegenläufigen Gewinden, vorteilhaft Außengewinden 21,22, versehene Spannstange 20 auf und umfaßt mit der Spannstange 20 verschraubbare Spannstücke 23,24, die mit einem Widerlager am obersten und untersten Rohrhaltekörper 1 einer Vorrichtungseinheit verbindbar sind. Die Spannfeder findet dabei vorteilhaft zwischen dem oberen Widerlager und dem oberen Spannstück 24 Anordnung.

Bei der Ausführung nach Fig. 1 bis 8 ist die Spannfeder von einem Tellertederpaket 25 gebildet, jedoch kann sie auch von einer Schraubenfeder 26 gebildet sein, wie das die Fig. 9 veranschaulicht. Grundsätzlich kann jedes geeignete Federelement als Spannfeder Verwendung finden, jedoch sind Tellerfederpakete bzw. Schraubenfedern aus Kostengründen sowie aus Gründen sicherer Funktionsweise und Haltbarkeit bevorzugt.

Das obere, in seinem unteren Bereich mit einer Bohrung mit Innengewinde versehene Spannstück 24 bildet einen Spannbolzen, der in der Nähe seines oberen Endes eine Anlageschulter 27 für eine unterseitige Abstützung der Spannfeder 25 oder 26 aufweist. Die Anlageschulter 27 ist vorteilhaft als Ringbund gebildet. Der Bereich oberhalb der Anlageschulter 27 bevorzugt als Schraubenkopf 28 ausgebildet ist.

Das obere Spannstück 24 kann bis auf den unteren Bereich mit Innengewinde als Bauteil mit Vollquerschnitt ausgeführt sein, jedoch kann es auch eine rohrförmige Grundform aufweisen und dementsprechend im Bereich oberhalb des Innengewindes einen Rohrkörper bilden.

Das untere Spannstück 23 ist als Spannhaken ausgebildet und nach Aufschrauben seines Innengewindes auf das Außengewinde 21 der Spannstange 20 durch eine Kontermutter 29 auf der Spannstange 20 fixiert. Mit seinem Hakenteil umgreift das untere Spannstück 23 den Querstecker 13 im untersten Rohrhaltekörper 1, der das untere Widerlager bildet.

Wenn wie bei dem Ausführungsbeispiel gemäß Fig. 9 sämtliche Rohrhaltekörper 1 eine untereinander identische Ausbildung haben, findet als oberes Widerlager im obersten Rohrhaltekörper 1 einer Vorrichtungseinheit bevorzugt ein Spannblock 30 Verwendung, der eine in Betriebsstellung vertikale Durchgangsbohrung 31 aufweist. Zur Abstützung des Spannblocks 30 in der stirnseitigen Nut 9 des Rohrhaltekörpers 1, der als Würfel oder Quader, gegebenenfalls mit leicht balligen Seitenflächen, ausgebildet sein kann, dienen Schraubenbolzen in der Querbohrung 11, die sich bis in eine Querbohrung 32 im Spannblock 30 von entgegengesetzten Seiten her hineinerstrecken. Diese Querbohrung 32 im Spannblock 30 ist zur zur Durchgangsbohrung 31 im Spannblock 30 orthogonal ausgerichtet ist und verschneidet sich mit dieser. Auf dem Spannblock 30 stützt sich bei dem Ausführungsbeispiel nach Fig. 9 die Schraubenfeder 26 ab, die mit ihrem anderen Ende die Anlageschulter 27 des oberen Spannstücks 24 untergreift.

Grundsätzlich kann die Spannfeder auch an anderer Stelle wirken, z.B. wenn die Spannstange als Teleskopstange ausgebildet ist und die Spannfeder zwischen den Stangenteilen wirksam ist, um diese auseinanderzufahren. Auch eine Anordnung zwischen dem unteren Spannstück 23 und dem unteren Widerlager 13 ist denkbar. Sie kann auch ganz entfallen, wenn Temperaturdifferenzen nicht zu erwarten sind.

Auf dem oberen Spannstück 24 kann eine Schutzhülse 33 angebracht sein, um beispielsweise Hebeseile oder Gurte vor Beschädigungen bei Hubvorgängen auf Transportwegen zu schützen.

Die Vorrichtung nach der Erfindung sichert auch unter Temperaturbedingungen, die z.B. in Wüstenbereichen Temperaturdifferenzen von bis zu 70° und mehr im Tagesverlauf erreichen oder zwischen einem Ort der Herstellung der Verspannung der Vorrichtungsteile mit den Rohren und einem entlegenen Ort ihres Gebrauches mit Tieftemperaturen gegeben ist, eine sichere Abstützung der Rohre. Dabei ist die Vorrichtung zuverlässig, von hoher Lebensdauer und unempfindlichen gegen Beschädigungen.

Das Spannmittel 10 der vorbeschriebenen Art liegt vollständig innerhalb des Bereichs der Nuten 9 der Rohrhaltekörper, so daß weder nach oben noch nach unten noch zur Seite irgendwelche Überstände gegeben sind, die Anlaß zu Beschädigungen sein könnten.

## Patentansprüche

1. Vorrichtung zur Abstützung von Rohren (15) bei deren Lagerung und Transport in einer vorgegebenen Anordnung neben- und übereinander in beabstandeten Lagen, mit in Betriebsstellung unter und über jeder Rohrlage vertikal übereinander angeordneten Rohrhaltekörpern (1), die ober- und unterseitig eine Anzahl von einander diametral gegenüberliegenden, untereinander beabstandeten Ausnehmungen (2) zur Rohraufnahme aufweisen und durch ein innerhalb einer in beiden Stirnenden der Rohrhaltekörper (1) vorgesehenen durchgehenden, vertikalen Nut (9) angeordnetes und bei einem obersten Rohrhaltekörper (1) eine Durchgangsbohrung in einem Widerlager (18;30) durchgreifendes Spannmittel (10) zu einer Einheit zusammenspannbar sind, **dadurch gekennzeichnet, dass** das Spannmittel (10) über eine Spannfeder (25;26) die Rohrhaltekörper (1) zu einer Einheit zusammenspannt und ein oberes Spannstück (24) umfasst, das von einem Spannbolzen mit Innengewinde im unteren Bereich gebildet ist und eine Anlageschulter (27) in der Nähe seines oberen Endes für die Abstützung der Spannfeder (25,26) aufweist.

2. Vorrichtung nach Anspruch 1, **dadurch gekennzeichnet, dass** das Spannmittel (10) eine an ihren Endbereichen mit gegenläufigen Gewinden (21,22) versehene Spannstange (20) und zwei mit dieser verschraubbare Spannstücke (23,24) aufweist, und zwar das obere Spannstück (24) und ein unteres Spannstück (23), die mit Widerlagern (18';30;31) am obersten und untersten Rohrhaltekörper (1) verbindbar sind, und die Spannfeder (25;26) zwischen dem Widerlager des obersten Rohrhaltekörpers (1) und dem oberen Spannstück (24) angeordnet ist.

3. Vorrichtung nach Anspruch 2, **dadurch gekennzeichnet, dass** die Spannstange als Teleskopstange ausgebildet und die Spannfeder zwischen den Stangenteilen angeordnet ist und deren Auseinanderziehen entgegenwirkt.

4. Vorrichtung nach Anspruch 2, **dadurch gekennzeichnet, dass** die Spannstange (20) an beiden Enden mit einem Außengewinde (21,22) versehen ist, auf das die mit Innengewinde versehenen Spannstücke (23;24) aufschraubbar sind.

5. Vorrichtung nach einem der Ansprüche 1 bis 5, **dadurch gekennzeichnet, dass** das obere Spannstück (24) im oberen Bereich einen Ringbund (27) als abwärtsgerichtete Anlageschulter aufweist und der Bereich oberhalb der Ringschulter (27) als Schraubenkopf (28) ausgebildet ist.

6. Vorrichtung nach Anspruch 5, **dadurch gekennzeichnet, dass** das obere Spannstück (24) bis auf den unteren Innengewindebereich als Bauteil mit Vollquerschnitt ausgeführt ist.

7. Vorrichtung nach Anspruch 5, **dadurch gekennzeichnet, dass** das obere Spannstück (24) im Bereich oberhalb des Innengewindes als Rohrkörper ausgebildet ist.

8. Vorrichtung nach einem der Ansprüche 2 bis 7, **dadurch gekennzeichnet, dass** das untere Spannstück (23) als Spannhaken ausgebildet und nach seinem Aufschrauben auf die Spannstange (20) durch eine Kontermutter (29) auf der Spannstange (20) fixiert ist.

9. Vorrichtung nach einem der Ansprüche 1, 2 oder 4 bis 8, **dadurch gekennzeichnet, dass** als Spannfeder eine Schraubenfeder (26) vorgesehen ist.

10. Vorrichtung nach einem der Ansprüche 1, 2 oder 4 bis 8, **dadurch gekennzeichnet, dass** als Spannfeder ein aus mehreren Tellerfedern bestehendes Federpaket (25) vorgesehen ist.

11. Vorrichtung nach einem der Ansprüche 1 bis 7, **dadurch gekennzeichnet, dass** als Widerlager für den obersten Rohrhaltekörper (1) ein Spannblock (30) vorgesehen ist, der eine zu seiner Durchgangsbohrung (31) orthogonal ausgerichtete Querbohrung aufweist, die in ihren an die Durchgangsbohrung (30) angrenzenden Außenbereichen jeweils mit einem Innengewinde für die Aufnahme jeweils eines im Rohrhaltekörper (1) abgestützen Schraubenbolzens versehen ist.

12. Vorrichtung nach Anspruch 11, **dadurch gekennzeichnet, dass** der Spannblock (30) als Würfel oder Quader ausgebildet ist.

13. Vorrichtung nach einem der Ansprüche 1 bis 7, **dadurch gekennzeichnet, dass** die Rohrhaltekörper (1) in ihrem Mittelteil (16) zwischen beidseitigen trapezförmigen Ausnehmungen (2) mit einer von einem Doppel-T-Profilträger gebildeten Verstärkungseinlage (17) versehen sind, deren Mittelschenkel (18) parallel zu den Basisflächen (4) der Ausnehmungen (2) mittig zwischen diesen verläuft.

14. Vorrichtung nach Anspruch 13, **dadurch gekennzeichnet, dass** sich der Mittelschenkel (18) der Verstärkungseinlage (17) in einem obersten Rohrhaltekörper (1) zur Bildung eines Widerlagers bis in dessen stirnseitigen Nuten (9) erstreckt, in darunter befindlichen Rohrhaltekörpern jedoch vor deren stirnseitigen Nuten endet.

15. Vorrichtung nach Anspruch 14, **dadurch gekennzeichnet, dass** der in die stirnseitigen Nuten (9) oberster Rohrhaltekörper (1) als Widerlager vorspringende Mittelschenkelbereich (18') der Verstärkungseinlage (17) durch ein die Durchgangsbohrung im Widerlager umgebendes Plattenteil (19) verstärkt ist.

16. Vorrichtung nach Anspruch 15, **dadurch gekennzeichnet, dass** der Plattenteil (19) dem in die Nuten (9) vorspringenden Mittelschenkelbereich (18') unterseitig zugeordnet ist.

17. Vorrichtung nach Anspruch 15 oder 16, **dadurch gekennzeichnet, dass** das Plattenteil (19) mit dem Mittelschenkelbereich (18') der Verstärkungseinlage (17) fest verbunden, vorzugsweise verschweißt ist.

18. Vorrichtung nach Anspruch 15, **dadurch gekennzeichnet, dass** das Plattenteil (19) dem Mittelschenkelbereich (18') der Verstärkungseinlage (17) oberseitig zugeordnet und als Unterlegscheibe ausgebildet ist.

19. Vorrichtung nach einem der Ansprüche 1 bis 18, **dadurch gekennzeichnet, dass** das obere Ende des oberen Spannstücks (24) jeweils vollständig innerhalb der stirnseitigen Nut (9) der Rohrhaltekörper (1) gelegen ist.

## Claims

1. Device for supporting pipes (15) where the latter are stored and transported in a preset arrangement next to one another and one above another in spaced layers, having pipe-holding bodies (1) which, in the operating position, are arranged one above another vertically, above and below each layer of pipes, and which have, on the top and bottom sides, a plurality of recesses (2) for receiving pipes, the said recesses (2) being situated diametrically opposite one another and being spaced apart from one another, and which can be clamped together into a unit by a clamping means (10), which clamping means (10) is arranged within a continuous vertical groove (9) provided in each of the two end-faces of the pipe-holding bodies (1) and, at a topmost pipe-holding body (1), passes through a through-hole in an abutment (18', 30), **characterised in that** the clamping means (10) clamps the pipe-holding bodies (1) together into a unit via a clamping spring (25, 26) and comprises a top clamping member (24) which is formed by a clamping bolt having an inside thread in its lower region and which has a contacting shoulder (27) in the vicinity of its top end to be supported against the clamping spring (25, 26).

2. Device according to claim 1, **characterised in that** the clamping means (10) has a clamping rod (20) which is provided with opposite-handed threads (21, 22) in its end regions, and has two clamping members (23, 24), namely the top clamping member (24) and a bottom clamping member (23), which can be screwed to the said clamping rod (20) and which can be connected to abutments (18'; 30, 31) at the topmost and bottommost pipe-holding bodies (1) , and the clamping spring (25, 26) is arranged between the abutment of the topmost pipe-holding body (1) and the top clamping member (24).

3. Device according to claim 2, **characterised in that** the clamping rod takes the form of a telescopic rod and the clamping spring is arranged between the parts of the rod and opposes the drawing thereof apart from one another.

4. Device according to claim 2, **characterised in that** the clamping rod (20) is provided at both ends with an outside thread (21, 22) onto which the clamping members (23, 24) provided with inside threads can be screwed.

5. Device according to one of claims 1 to 5, **characterised in that** the top clamping member (24) has, in the upper region, an annular collar (27) serving as a downward-facing contacting shoulder and the region above the annular shoulder (27) takes the form of a bolt head (28).

6. Device according to claim 5, **characterised in that**, except for the bottom region having the inside thread, the top clamping member (24) takes the form of a component of solid cross-section.

7. Device according to claim 5, **characterised in that** the top clamping member (24) takes the form of a tubular body in the region above the inside thread.

8. Device according to one of claims 2 to 7, **characterised in that** the bottom clamping member (23) is in the form of a clamping hook and, having been screwed onto the clamping rod (20), is fixed in place on the clamping rod (20) by a lock-nut (29).

9. Device according to one of claims 1, 2 or 4 to 8, **characterised in that** a coil spring (26) is provided as the clamping spring.

10. Device according to one of claims 1, 2 or 4 to 8, **characterised in that** a stack of springs (25) comprising a plurality of disc springs is provided as the clamping spring.

11. Device according to one of claims 1 to 7, **characterised in that** there is provided as an abutment for the topmost pipe-holding body (1) a clamping block (30) which has a transverse hole, aligned orthogonally to its through-hole (31), which, in its outer parts adjacent to the through-hole (30), is provided with inside threads to receive respective stud bolts supported in the pipe-holding body (1).

12. Device according to claim 11, **characterised in that** the clamping block (30) is in the form of a cube or cuboid.

13. Device according to one of claims 1 to 7, **characterised in that**, in their central portion (16) situated between trapezoidal recesses (2) on either side, the pipe-holding bodies (1) are provided with a reinforcing insert (17) formed by an I-section beam, the centre web (18) of which reinforcing insert (17) extends parallel to the bottom faces (4) of the recesses (2), centrally therebetween.

14. Device according to claim 13, **characterised in that**, in a topmost pipe-holding body (1), the centre web (18) of the reinforcing insert (17) extends into the grooves (9) in the end-faces of the topmost pipe-holding body (1) to form abutments, but in pipe-holding bodies situated lower down it terminates before reaching the grooves in their end-faces.

15. Device according to claim 14, **characterised in that that** region (18') of the centre web of the reinforcing insert (17) which projects into the groove (9) in an endface of a topmost pipe-holding body (1) as an abutment is reinforced by a plate member (19) surrounding the through-hole in the abutment.

16. Device according to claim 15, **characterised in that** it is on the underside that the plate member (19) is associated with that region (18') of the centre web which projects into the groove (9).

17. Device according to claim 15 or 16, **characterised in that** the plate member (19) is solidly connected, and preferably welded, to the region (18') of the centre web of the reinforcing insert (17).

18. Device according to claim 15, **characterised in that** it is on the upper side that the plate member (19) is associated with the region (18') of the centre web of the reinforcing insert (17) and it takes the form of a washer.

19. Device according to one of claims 1 to 18, **characterised in that** the top ends of the top clamping members (24) are situated entirely inside their respective grooves (9) in the end-faces of the pipe-holding bodies (1).

## Revendications

1. Dispositif de soutien de tubes (15) lors de leur stockage et transport dans un agencement prescrit à côté et au-dessus les uns des autres dans des positions espacées, avec des corps de retenue de tube (1) disposés verticalement les uns au-dessus des autres sous et sur chaque position de tube en position de fonctionnement, qui présentent côté supérieur et inférieur un nombre d'évidements (2) diamétralement opposés les uns aux autres, espacés entre eux pour la réception des tubes et peuvent être serrés ensemble en une unité par un moyen de serrage (10) recouvrant un perçage débouchant dans un contre-appui (18', 30) en cas de corps de retenue de tube (1) le plus haut et disposé dans une rainure (9) verticale, continue, prévue dans les deux extrémités avant des corps de retenue de tube (1), **caractérisé en ce que** le moyen de serrage (10) serre ensemble les corps de retenue de tube (1) en une unité par un ressort tendeur (25 ; 26) et comporte un tendeur (24) supérieur qui est formé par un boulon de tension avec un filetage intérieur dans la zone inférieure et présente un épaulement d'appui (27) à proximité de son extrémité supérieure pour l'appui des ressorts tendeurs (25, 26).

2. Dispositif selon la revendication 1, **caractérisé en ce que** le moyen de serrage (10) présente une tige tendeuse (20) pourvue sur ses zones d'extrémité de filetages opposés (21, 22) et deux tendeurs (23, 24) pouvant être vissés avec celle-ci, plus précisément le tendeur supérieur (24) et un tendeur inférieur (23), qui peuvent être reliés à des contre-appuis (18' ; 30 ; 31) sur le corps de retenue de tube le plus haut et le plus bas (1) et le ressort tendeur (25 ; 26) est disposé entre le contre-appui du corps de retenue de tube le plus haut (1) et le tendeur supérieur (24).

3. Dispositif selon la revendication 2, **caractérisé en ce que** la tige tendeuse est réalisée comme une tige télescopique et le ressort tendeur est disposé entre les parties de tige et agit contre leur allongement.

4. Dispositif selon la revendication 2, **caractérisé en ce que** la tige tendeuse (20) est pourvue sur ses deux extrémités d'un filetage extérieur (21, 22), sur lequel peuvent être vissés des tendeurs (23 ; 24) pourvus d'un filetage intérieur.

5. Dispositif selon l'une quelconque des revendications 1 à 5, **caractérisé en ce que** le tendeur supérieur (24) présente dans la zone supérieure un collet annulaire (27) comme un épaulement d'appui orienté vers le bas et la zone au-dessus de l'épaulement annulaire (27) est réalisée comme tête de vis (28).

6. Dispositif selon la revendication 5, **caractérisé en ce que** le tendeur (24) supérieur est réalisé jusqu'à la zone de filetage intérieur inférieure comme un composant avec une section transversale pleine.

7. Dispositif selon la revendication 5, **caractérisé en ce que** le tendeur (24) supérieur est réalisé dans la zone au-dessus du filetage intérieur comme un corps de tube.

8. Dispositif selon l'une quelconque des revendications 2 à 7, **caractérisé en ce que** le tendeur (23) inférieur est réalisé comme un crochet tendeur et après son vissage sur la tige tendeuse (20) est fixé par un contre-écrou (29) sur la tige tendeuse (20).

9. Dispositif selon l'une quelconque des revendications 1, 2 ou 4 à 8, **caractérisé en ce qu'**un ressort cylindrique (26) est prévu comme ressort tendeur.

10. Dispositif selon l'une quelconque des revendications 1, 2 ou 4 à 8, **caractérisé en ce qu'**un bloc-ressort (25) se composant de plusieurs rondelles-ressorts est prévu comme ressort tendeur.

11. Dispositif selon l'une quelconque des revendications 1 à 7, **caractérisé en ce que** comme contre-appui pour le corps de retenue de tube (1) le plus haut est prévu un bloc de tension (30) qui présente un perçage transversal orienté orthogonalement à son perçage débouchant (31) qui est pourvu dans ses zones extérieures contiguës au perçage débouchant (30) respectivement d'un filetage intérieur pour la réception respectivement d'un boulon fileté en appui dans le corps de retenue de tube (1).

12. Dispositif selon la revendication 11, **caractérisé en ce que** le bloc de tension (30) est réalisé comme un cube ou un parallélépipède.

13. Dispositif selon l'une quelconque des revendications 1 à 7, **caractérisé en ce que** les corps de retenue de tube (1) sont pourvus dans leur partie médiane (16) entre des évidements (2) en forme de trapèze des deux côtés, d'une couche intermédiaire de renforcement (17) formée par un support profilé en double T, dont la branche médiane (18) s'étend parallèlement aux surfaces de base (4) des évidements (2) au milieu de celles-ci.

14. Dispositif selon la revendication 13, **caractérisé en ce que** la branche médiane (18) de la couche intermédiaire de renforcement (17) s'étend dans un corps de retenue de tube le plus haut (1) pour la formation d'un contre-appui jusque dans ses rainures (9) côté avant, se termine toutefois dans des corps de retenue de tube se trouvant dessous avant leurs rainures côté avant.

15. Dispositif selon la revendication 14, **caractérisé en ce que** la zone de branche médiane (18') faisant saillie comme un contre-appui dans les rainures (9) côté avant des corps de retenue de tube (1) les plus hauts est renforcée par une partie de plaque (19) entourant le perçage débouchant dans le contre-appui.

16. Dispositif selon la revendication 15, **caractérisé en ce que** la partie de plaque (19) est associée côté inférieur à la zone de branche médiane (18') faisant saillie dans les rainures (9).

17. Dispositif selon la revendication 15 ou 16, **caractérisé en ce que** la partie de plaque (19) est fixement reliée, de préférence est soudée à la zone de branche médiane (18') de la couche intermédiaire de renforcement (17).

18. Dispositif selon la revendication 15, **caractérisé en ce que** la partie de plaque (19) est associée côté supérieur à la zone de branche médiane (18') de la couche intermédiaire de renforcement (17) et est réalisée comme rondelle.

19. Dispositif selon l'une quelconque des revendications 1 à 18, **caractérisé en ce que** l'extrémité supérieure du tendeur (24) supérieur est posée respectivement entièrement dans la rainure (9) côté avant des corps de retenue de tube (1).
